# EUROPEAN PATENT APPLICATION

(11) **EP 4 380 269 A1**
(43) Date of publication of application: **05.06.2024**
(21) Application number: 21951262.1
(22) Date of filing: 28.07.2021
(51) Int. Cl.: H04W 72/04

(54) **RESOURCE DETERMINATION METHOD AND APPARATUS, DEVICE, AND READABLE STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2021/109072
(87) International publication number: WO 2023/004650

(57) **Abstract**

Provided in the present disclosure are a resource determination method and apparatus, a device, and a readable storage medium, relating to the field of communications. The method comprises: receiving first configuration information and second configuration information, the first configuration information comprising a first time domain resource, a first frequency domain resource, and M first beams, the second configuration information comprising a second time domain resource, a second frequency domain resource, and N second beams, and the first time domain resource and the second time domain resource having overlapping time domain resources, wherein M and N are positive integers; and determining a specified transmission resource on the overlapping time domain resources. Thus, proposed is a method for determining a transmission beam when the time domain resources indicated by two items of DCI signalling received by the terminal overlap, ensuring beam consistency between the terminal and the base station, and improving the beam transmission performance.

## Description

### TECHNICAL FIELD

The disclosure relates to a field of communication, more particularly to a resource determination method, a resource determination apparatus, and a device, and a readable storage medium.

### BACKGROUND

In a new radio (NR) system, there are both an enhanced mobile broadband (eMBB) service and an ultra-reliable & low latency communication (URLLC) service.

After a base station allocates a frequency domain resource RB set#0 in the t1 slot to the eMBB service in the t0 slot, the URLLC service bursts, and the base station allocates the RB set#0 of two symbols in the t1 slot to the URLLC service. In this case, it is difficult for a terminal to determine which beam and resource to perform transmission.

### SUMMARY

Embodiments of the disclosure provide a resource determination method and apparatus, a device, and a readable storage medium, which may indicate a resource allocation mode when service resources are overlapped. The technical solution includes the following.

In a first aspect, there is provided a resource determination method, applied to a first terminal. The method includes:
receiving first configuration information and second configuration information, in which the first configuration information includes a first time domain resource, a first frequency domain resource and M first beams, the second configuration information includes a second time domain resource, a second frequency domain resource and N second beams, and the first time domain resource and the second time domain resource have an overlapped time domain resource, where M and N are positive integers; and
determining a specified transmission resource on the overlapped time domain resource.

In another aspect, there is provided a resource determination method, applied to a second terminal. The method includes:
receiving configuration information, in which the configuration information is configured to indicate an occupation status of a time domain resource and a frequency domain resource to the second terminal; and
determining whether transmission with at least one antenna panel is performed on the time domain resource based on the configuration information.

The configuration information includes at least one of:
the time domain resource;
the frequency domain resource;
the at least one antenna panel; or
at least one third beam.

In another aspect, there is provided a resource determination method, performed by a network device. The method includes:
sending first configuration information and second configuration information to a first terminal, in which the first configuration information includes a first time domain resource, a first frequency domain resource and M first beams, the second configuration information includes a second time domain resource, a second frequency domain resource and N second beams, and the first time domain resource and the second time domain resource have an overlapped time domain resource, where M and N are positive integers; and
determining a specified transmission resource for the first terminal on the overlapped time domain resource.

In another aspect, there is provided a resource determination method, performed by a network device. The method includes:
sending configuration information to a second terminal, in which the configuration information is configured to indicate an occupation status of a time domain resource and a frequency domain resource to the second terminal.

The configuration information includes at least one of:
the time domain resource;
the frequency domain resource;
at least one antenna panel; or
at least one third beam.

In another aspect, there is provided a resource determination apparatus, applied to a first terminal. The apparatus includes:
a receiving module, configured to receive first configuration information and second configuration information, in which the first configuration information includes a first time domain resource, a first frequency domain resource and M first beams, the second configuration information includes a second time domain resource, a second frequency domain resource and N second beams, and the first time domain resource and the second time domain resource have an overlapped time domain resource , where M and N are positive integers; and
a processing module, configured to determine a specified transmission resource on the overlapped time domain resource.

In another aspect, there is provided a resource determination apparatus, applied to the second terminal. The apparatus includes:
a receiving module, configured to receive configuration information, in which the configuration information is configured to indicate an occupation status of a time domain resource and a frequency domain resource to a second terminal; and
a processing module, configured to determine whether transmission with at least one antenna panel is performed on the time domain resource based on the configuration information.

The configuration information includes at least one of:
the time domain resource;
the frequency domain resource;
the at least one antenna panel; or
at least one third beam.

In another aspect, there is provided a resource determination apparatus. The apparatus includes:
a sending module, configured to send first configuration information and second configuration information to a first terminal, in which the first configuration information includes a first time domain resource, a first frequency domain resource and M first beams, the second configuration information includes a second time domain resource, a second frequency domain resource and N second beams, and the first time domain resource and the second time domain resource have an overlapped time domain resource , where M and N are positive integers; and
a processing module, configured to determine a specified transmission resource for the first terminal on the overlapped time domain resource.

In another aspect, there is provided a resource determination apparatus. The apparatus includes:
a sending module, configured to send configuration information to a second terminal, in which the configuration information is configured to indicate an occupation status of a time domain resource and a frequency domain resource to the second terminal.

The configuration information includes at least one of:
the time domain resource;
the frequency domain resource;
at least one antenna panel; or
at least one third beam.

In another aspect, there is provided a terminal. The terminal includes:
a processor;
a transceiver, connected to the processor; and
a memory, configured to store executable signalings of the processor.

The processor is configured to load and execute the executable signalings to implement the resource determination method according to the above embodiments of the disclosure.

In another aspect, there is provided a network device. The network device includes:
a processor;
a transceiver, connected to the processor; and
a memory, configured to store executable signalings of the processor.

The processor is configured to load and execute the executable signalings to implement the resource determination method according to the above embodiments of the disclosure.

In another aspect, there is provided a computer readable storage medium having at least one instruction, at least one program, at least one code set or at least one instruction set stored thereon. The at least one instruction, the at least one program, the at least one code set or the at least one instruction set is loaded and executed by a processor to implement the resource determination method according to the above embodiments of the disclosure.

In another aspect, there is provided a computer program product. The computer program product includes a computer instruction. The computer instruction is stored in a computer readable storage medium. A processor of a computer device is configured to read the computer instruction from the computer readable storage medium. The processor is configured to execute the computer instruction, to enable the computer device to perform the resource determination method according to any one of the above embodiments.

The technical solution provided by embodiments of the disclosure at least includes the following beneficial effects.

A method is proposed for determining a transmission beam when time domain resources indicated by two DCI signalings received by the terminal are overlapped, so that a beam consistency between the terminal and the base station is ensured, thereby improving a performance of beam-based transmission.

### BRIEF DESCRIPTION OF THE DRAWINGS

In order to clearly illustrate technical solutions in embodiments of the disclosure, a brief description of accompanying drawings used in embodiments is given below. Obviously, the accompanying drawings in the following descriptions are merely part embodiments of the disclosure, and for those skilled in the art, other accompanying drawings can also be obtained based on these accompanying drawings without creative labor.
FIG. 1 is a schematic diagram illustrating a communication system according to an embodiment of the disclosure.
FIG. 2 is a flow chart illustrating a resource determination method according to an embodiment of the disclosure.
FIG. 3 is a schematic diagram illustrating a transmission solution according to an embodiment of the disclosure.
FIG. 4 is a schematic diagram illustrating a transmission solution according to another embodiment of the disclosure.
FIG. 5 is a schematic diagram illustrating a transmission solution according to another embodiment of the disclosure.
FIG. 6 is a schematic diagram illustrating a transmission solution according to another embodiment of the disclosure.
FIG. 7 is a flow chart illustrating a resource determination method according to another embodiment of the disclosure.
FIG. 8 is a block diagram illustrating a resource determination apparatus according to an embodiment of the disclosure.
FIG. 9 is a block diagram illustrating a resource determination apparatus according to another embodiment of the disclosure.
FIG. 10 is a block diagram illustrating a resource determination apparatus according to another embodiment of the disclosure.
FIG. 11 is a block diagram illustrating a terminal according to an embodiment of the disclosure.
FIG. 12 is a block diagram illustrating a network device according to an embodiment of the disclosure.

### DETAILED DESCRIPTION

In order to clarify an objective, a technical solution and an advantage of the disclosure, description will be made below in detail to embodiments of the disclosure with reference to accompanying drawings.

Embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following embodiments do not represent all implementations consistent with the disclosure. Instead, they are merely examples of apparatuses and methods consistent with aspects of embodiments of the disclosure as detailed in the appended claims.

The term employed in the embodiments of disclosure is merely for the purpose of describing a detailed embodiment, and is not intended to limit embodiments of the disclosure. As used in embodiments of the disclosure and the appended claims, a singular form "a/an" or "the/said" is also intended to include plural forms, unless the context clearly indicates other meaning. It should also be understood that, the term "and/or" as used herein refers to including any or all possible combinations of one or more associated listed items.

It should be understood that, although the terms such as "first, second, third" may be employed in embodiments of the disclosure to describe various kinds of information, such various kinds of information should not be limited to these terms. These terms are merely used to distinguish a same type of information from each other. For example, without departing from a scope of embodiments of the disclosure, first information may also be called second information, and similarly, the second information may also be called the first information. Depending on the context, the term "if" as used herein may be interpreted as "when" or "in a case that..." or "in response to a determination".

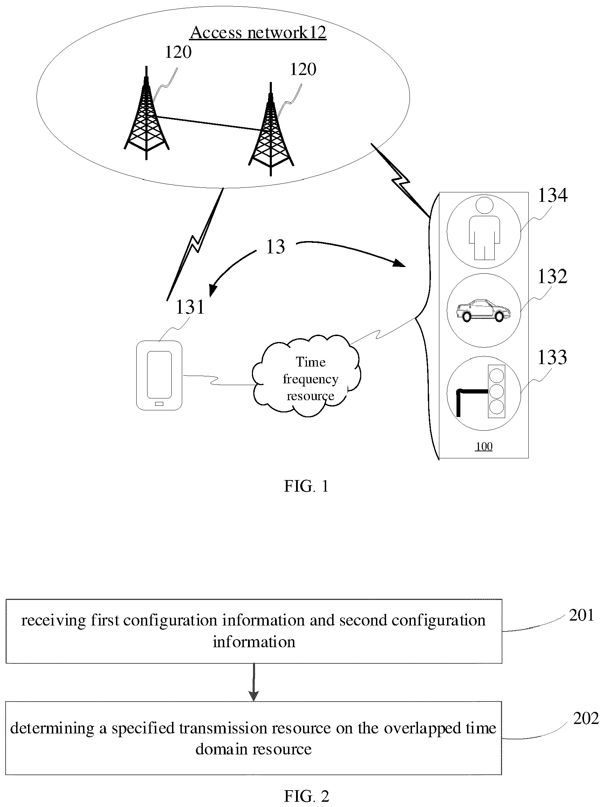

FIG. 1 is a schematic diagram illustrating a communication system according to an embodiment of the disclosure. The communication system may include: an access network 12 and a terminal 13.

The access network 12 includes multiple access network devices 120. The access network device 120 may be a base station. The base station is a device deployed in the access network and configured to provide a wireless communication function for the terminal. The base station may include various forms of macro stations, micro base stations, relay stations, access points and the like. Names of a device with a base station function may be different in systems with different wireless access technologies. For example, the device is called eNodeB or eNB in a long-term evolution (LTE) system, and the device is called gNB or gNodeB in a 5G new radio (NR) system. With the development of communication technologies, the name "base station" may be described and changed. For convenience, in embodiments of the disclosure, the above devices for providing the wireless communication function for the terminal are collectively referred to as the access network device.

The terminal 13 may include various handheld devices, vehicle-mounted devices, wearable devices, and computing devices having the wireless communication function, or other processing devices connected to a wireless modem, various forms of terminals (UEs), mobile stations (MSs), terminal devices, and the like. For the convenience of description, the above devices are collectively referred to as terminal. The access network device 120 communicates with the terminal 13 through some air interface technologies, such as a Uu interface.

In embodiments of the disclosure, the terminal 13 includes a vehicle 131, another vehicle 132, an infrastructure 133 and a pedestrian 134.

Vehicle to vehicle (V2V) refers to a communication between the vehicle 131 and another vehicle 132. The vehicle sends its own related information to another vehicle, and the related information includes a driving velocity, a geographical position, a driving direction, a driving state, and the like.

Vehicle to infrastructure (V2I) refers to a communication between the vehicle 131 and the infrastructure 133. The infrastructure 133 includes all the infrastructures encountered during driving of the vehicle, including a building facility such as a traffic light, a bus stop, a building, and a tunnel.

Vehicle to pedestrian (V2P) refers to a communication between the vehicle 131 and the pedestrian 134. The pedestrian generally refers to a pedestrian carrying an electronic device with a mobile communication capability, such as a mobile phone or a wearable device. The wearable device includes a smart bracelet, a smart watch, and a smart ring.

In embodiments of the disclosure, for example, the vehicle 131 is referred to as a first terminal, and the another vehicle 132, the infrastructure 133 and the pedestrian 134 are referred to as a second terminal for description, but the first terminal and the second terminal may exchange their roles, which is not limited herein.

Alternatively, the first terminal and the second terminal are terminals supporting a direct communication, and the communication system may be an NR system and a subsequent evolution system.

In the NR system, there are both an enhanced mobile broadband (eMBB) service and an ultra-reliable & low latency communication (URLLC) service. Due to a high delay and a reliability requirement of the URLLC service, there may be the following situations. A network device allocates a frequency domain resource block (RB) set#0 in t1 slot to the eMBB service of the first terminal in t0 slot. The URLLC service of the second terminal bursts after the allocation is completed, and the network device allocates two symbols of the RB set#0 in the t1 slot to the URLLC service of the second terminal. The first terminal and the second terminal may be a same terminal or different terminals.

A cooperative transmission technology based on multiple transmission reception points (multi-TRP) is introduced into the 5GNR system. The application of the multi-TRP/Panel (antenna panel) of the network device is mainly to improve a coverage at a cell edge, to provide a more balanced service quality in a service area, and to transmit data among multiple TRPs/Panels cooperatively in different ways. From a perspective of the network form, network deployment is performed with a large amount of distributed access points in combination with baseband centralized processing, which may be more beneficial to providing a balanced user experience rate, and significantly reducing a time delay and a signaling overhead caused by handoff. Channel transmission/reception is performed from multiple beams in multiple directions by employing a cooperation between the multiple TRPs/Panels, which may better overcome various occlusion/blocking effects and ensure robustness of a link connection, thereby facilitating improvement of transmission quality and meeting the reliability requirement for the URLLC (ultra-reliable low latency communication) service. One TRP may include one or more antenna panels, and the antenna panel in the disclosure may also be understood as the TRP.

In the discussion of the multi-TRP, single downlink control information (DCI), i.e., single-DCI, and multi-DCI may not be selected dynamically. Multiple different control resource set pool indexes (CORESET pool indexes) are configured in the multi-DCI, and each control resource set (CORESET) corresponds to a CORESET pool index. A DCI signaling indicates that a beam is used for a physical downlink shared channel (PDSCH) or a physical uplink shared channel (PUSCH). The PDSCH/PUSCH scheduled by DCI signalings belonging to CORESETs of different CORESET pool indexes may be out of order, that is, a first DCI is transmitted before a second DCI, while a second PDSCH/PUSCH scheduled by the second DCI may be transmitted before a PDSCH/PUSCH scheduled by the first DCI, and a CORESET pool index of a CORESET corresponding to the first DCI is different from a CORESET pool index of a CORESET corresponding to the second DCI. In other words, an out-of-order scheduling of the multi-DCI may meet a low delay requirement of the URLLC service.

However, in the multi-DCI, one DCI may only indicate one beam, which may not meet a high reliability requirement of the URLLC. However, all the CORESETs in the single-DCI correspond to a same CORESET pool index, and the DCI may schedule at most two beams, thereby meeting the reliability requirement of the URLLC.

It should be noted that, the beam may be understood as a downlink beam and/or an uplink beam. The downlink beam may include at least one of: a transmission configuration indication (TCI) state, a QCL (Quasi Co-location) type D, and Rx spatial parameters. The uplink beam may include at least one of: an uplink TCI state, spatial relation information (spatialrelationinfor) and spatial setting. The beam is indicated by a reference signal identification (ID). The reference signal may include at least one of: a synchronization signal block (SSB), a channel state information reference signal (CSI-RS) and a sounding reference signal (SRS).

Based on the context, in order to meet the low delay requirement and the high reliability requirement of the URLLC, a method for dynamically selecting the multi-DCI and the single-DCI is provided, but how to configure the beam and the resource still needs to be solved.

Embodiments of the disclosure provide a resource determination method. In a case that the first terminal and the second terminal are implemented as the same terminal, description will be made by applying the method to the first terminal, for example. As illustrated in FIG. 2, the method includes the following steps.

At step 201, first configuration information and second configuration information are received.

The first configuration information includes a first time domain resource, a first frequency domain resource and M first beams. The second configuration information includes a second time domain resource, a second frequency domain resource and N second beams. The first time domain resource and the second time domain resource have an overlapped time domain resource. M and N are positive integers.

Alternatively, the first configuration information may be implemented as at least one of a DCI signaling, a radio resource control (RRC) signaling, a medium access control element (MAC CE) or a physical layer signaling. In the embodiment, the first configuration information is implemented as a first DCI signaling, for example.

The second configuration information may be implemented as at least one of a DCI signaling, a RRC signaling, a MAC CE or a physical layer signaling. In the embodiment, the second configuration information is implemented as a second DCI signaling, for example.

Alternatively, in the first DCI signaling and the second DCI signaling, the first terminal receives the first DCI signaling first, and then receives the second DCI signaling. Alternatively, the first terminal simultaneously receives the first DCI signaling and the second DCI signaling. The first DCI signaling is a resource configuration instruction for a first service, and the second DCI signaling is a resource configuration instruction for a second service. A delay requirement of the second service may be higher than that of the first service. Schematically, the first DCI signaling is a resource configuration instruction for the eMBB service, and the second DCI signaling is a resource configuration instruction for the URLLC service.

Alternatively, in the M first beams configured in the first configuration information, M may be equal to or greater than 1. In a case that M is greater than 1, time domain resources corresponding to any two first beams are different; frequency domain resources corresponding to any two first beams are different; or, demodulation reference signal (DMRS) ports corresponding to any two first beams are different.

That is, there are at least following differences in terminal resources corresponding to respective beams in the M first beams.
1. The time domain resources are different. For example, a beam #1 is employed in a slot#1 and a beam #2 is employed in a slot#2. Alternatively, the beam #1 is employed in symbol #3-6 of the slot#1, and the beam #2 is employed in symbol#10-13 of the slot#1.
2. The frequency domain resources are different. For example, the beam #1 is employed for resource blocks RB#0-24, and the beam #2 is employed for RB#25-49. Alternatively, the beam #1 is employed for RB#0, #2, # 4 ... and the beam #2 is employed for RB#1, #3, # 5 ...
3. The DMRS ports are different. For example, the beam #1 is employed for an antenna port #1, and the beam #2 is employed for an antenna port #2.

Therefore, the first terminal may support multiple beams in the M first beams simultaneously. For example, the first terminal may support both the beam #1 and the beam #2 simultaneously.

Similarly, in the N second beams configured in the second configuration information, N may be equal to or greater than 1. In a case that N>1, time domain resources corresponding to any two second beams are different; frequency domain resources corresponding to any two second beams are different; or, DMRS ports corresponding to any two second beams are different.

That is, there are at least following differences in terminal resources corresponding to respective second beams in the N second beams.
1. The time domain resources are different. For example, a beam #3 is employed in the slot#1, and a beam #4 is employed in the slot#2. Alternatively, the beam #3 is employed in symbol#3-6 of the slot#1, and the beam #4 is employed in symbol#10-13 of the slot#1.
2. The frequency domain resources are different. For example, the beam #3 is employed for resource blocks RB#0-24, and the beam #4 is employed for RB#25-49. Alternatively, the beam #3 is employed for the RB#0, #2, #4 ..., and the beam # 4 is employed for the RB#1, #3, # 5 ...
3. The DMRS ports are different. For example, the beam #3 is employed for the antenna port #1, and the beam #4 is employed for the antenna port #2.

Therefore, the first terminal may support multiple beams in the N second beams simultaneously. For example, the first terminal may support both the beam #3 and the beam #4 simultaneously.

At step 202, a specified transmission resource on the overlapped time domain resource is determined.

Alternatively, the specified transmission resource refers to a transmission resource determined based on a support status of the first terminal for the first beam and the second beam, and an overlapping status of the first frequency domain resource and the second frequency domain resource.

Alternatively, the specified transmission resource includes a specified frequency domain resource and/or a specified beam.

The specified frequency domain resource includes at least one frequency domain resource of the first frequency domain resource and the second frequency domain resource. Alternatively, the specified frequency domain resource also needs to meet the requirement that the first terminal supports for the first beam and/or the second beam. That is, the first terminal determines the specified frequency domain resource based on the overlapping status of the first frequency domain resource and the second frequency domain resource after the support for the first beam and/or the second beam is determined. In some embodiments, the specified frequency domain resource also includes a third frequency domain resource. The third frequency domain resource is a frequency domain resource in the first frequency domain resource other than overlapped frequency domain resource.

The specified beam includes at least one group of beams in the first beams and the second beams. Alternatively, the specified beam includes a part of beams in the M first beams and/or a part of beams in the N second beams. Alternatively, the specified beam is a transmission beam determined by the first terminal based on the support status of the first terminal for the first beam and/or the second beam and the overlapping status of the first frequency domain resource and the second frequency domain resource.

In some embodiments, the specified beam includes the N second beams. Alternatively, the first beam is different from the second beam, that is, any first beam is different from any second beam, and the first terminal may not support the M first beams and the N second beams simultaneously. The specified frequency domain resource includes the second frequency domain resource.

Alternatively, the first frequency domain resource does not overlap with the second frequency domain resource, or there is an overlapped frequency domain resource between the first frequency domain resource and the second frequency domain resource.

In some embodiments, the N second beams include at least one first beam. The specified frequency domain resource includes the second frequency domain resource, or the specified frequency domain resource includes the second frequency domain resource and the third frequency domain resource. The third frequency domain resource includes the frequency domain resource in the first frequency domain resource that does not overlap with the second frequency domain resource. Alternatively, the third frequency domain resource is the same as the first frequency domain resource, or, the third frequency domain resource is smaller than the first frequency domain resource, that is, the third frequency domain resource is a part of the first frequency domain resource.

In some embodiments, the specified beam includes the N second beams and at least one first beam, and the at least one first beam is different from any second beam. Alternatively, the first terminal may support the at least one first beam and the N second beams simultaneously. The specified frequency domain resource includes the second frequency domain resource and the first frequency domain resource, in which the first frequency domain resource does not overlap with the second frequency domain resource.

Alternatively, the specified frequency domain resource includes the second frequency domain resource and the first frequency domain resource, and there is the overlapped frequency domain resource between the first frequency domain resource and the second frequency domain resource. Alternatively, in a case that the first frequency domain resource overlaps with the second frequency domain resource, different demodulation reference signal (DMRS) ports are employed by the at least one first beam and at least one second beam.

Alternatively, the specified frequency domain resource includes the second frequency domain resource. There is the overlapped frequency domain resource between the first frequency domain resource and the second frequency domain resource, and different demodulation reference signal (DMRS) ports are employed by the at least one first beam and the at least one second beam.

That is, in embodiments of the disclosure, the specified transmission resource on the overlapped time domain resource is determined based on a frequency domain overlapping status on the overlapped time domain resource and the support status for the at least one first beam and the at least one second beam.

Alternatively, a beam and a frequency domain resource for a channel transmission need to be determined on the overlapped time domain resource between the first time domain resource and the second time domain resource.

In embodiments of the disclosure, the transmission on the overlapped time domain resource is described as follows.

**In case 1**, the M first beams are different from the N second beams entirely, and the first frequency domain resource does not overlap with the second frequency domain resource.

1.1 In a case that the first terminal cannot support the M first beams and the N second beams simultaneously, the N second beams are uses for transmission on the overlapped time domain resource and the second frequency domain resource.

Schematically, take the M first beams including the beam #1, and the N second beams including the beam #2 and the beam #3 as an example for illustration. In a case that the first terminal cannot support the beam #1, the beam #2 and the beam #3 simultaneously, the beam #2 and the beam #3 are used for transmission on in the overlapped time domain resource and the second frequency domain resource.

The transmission includes sending a resource or receiving a resource, such as receiving a PDSCH or sending a PUSCH.

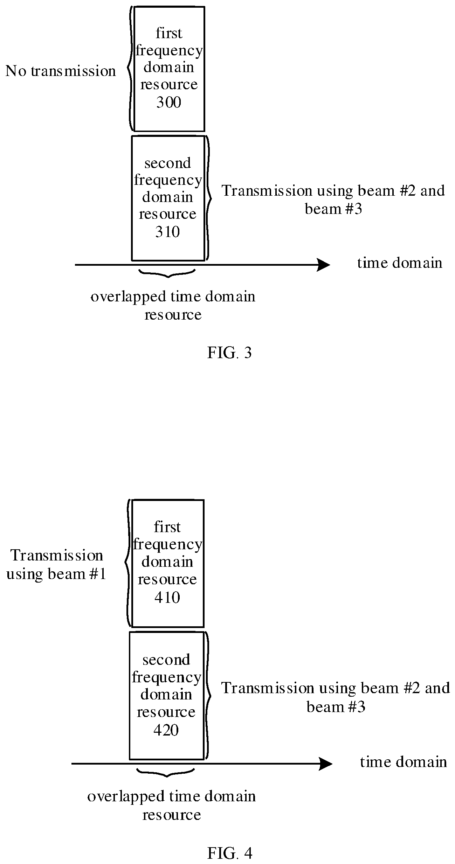

Schematically, please refer to FIG. 3, which is a schematic diagram illustrating a transmission solution according to an embodiment of the disclosure. As illustrated in FIG. 3, the first terminal cannot support the beam #1, the beam #2 and the beam #3 simultaneously on the overlapped time domain resource of the beam #1, the beam #2 and the beam #3. Therefore, the first terminal employs the beam #2 and the beam #3 for transmission on the overlapped time domain resource and the second frequency domain resource 310. The first frequency domain resource 300 does not overlap with the second frequency domain resource 310.

1.2 In a case that the first terminal can support the M first beams and the N second beams simultaneously, the N second beams are used to perform first transmission on the overlapped time domain resource and the second frequency domain resource, and the M first beams are used to perform second transmission on the overlapped time domain resource and the first frequency domain resource.

Schematically, take the M first beams including the beam #1, and the N second beams including the beam #2 and the beam #3 as an example for illustration. In a case that the first terminal can support the beam #1, the beam #2 and the beam #3 simultaneously, the beam #2 and the beam #3 are used to perform transmission on the overlapped time domain resource and the second frequency domain resource, and the beam #1 is used to perform transmission on the overlapped time domain resource and the first frequency domain resource.

The transmission includes sending or receiving the resource, such as receiving the PDSCH or sending the PUSCH.

Schematically, please refer to FIG. 4, which is a schematic diagram illustrating a transmission solution according to an embodiment of the disclosure. As illustrated in FIG. 4, the first frequency domain resource 410 does not overlap with the second frequency domain resource 420. The first terminal can support the beam #1, the beam #2 and the beam #3 simultaneously on the overlapped time domain resource of the beam #1, the beam #2 and the beam #3. Therefore, the first terminal employs the beam #2 and the beam #3 for transmission on the overlapped time domain resource and the second frequency domain resource 420, and employs the beam #1 for transmission on the overlapped time domain resource and the first frequency domain resource 410.

**In case 2**, the M first beams are partially the same as the N second beams, that is, the N second beams include at least one first beam, and the first frequency domain resource does not overlap with the second frequency domain resource.

Since the first terminal can support the N second beams in the N second beams simultaneously, that is, in case that the M first beams and the N second beams are partially the same, the first terminal can support the N second beams simultaneously, and the at least one first beam is included in the N second beams.

The first transmission is performed on the overlapped time domain resource and the second frequency domain resource by employing the N second beams, and the second transmission is performed on the overlapped time domain resource and the first frequency domain resource by employing the M first beams.

Schematically, take the M first beams including the beam #1 and the N second beams including the beam #2 and the beam #3 as an example for illustration. In a case that the beam #1 is the same as the beam #2, and it is obvious that the first terminal can support the beam #2 and the beam #3 simultaneously, the beam #2 and the beam #3 are used to perform the first transmission on the overlapped time domain resource and the second frequency domain resource, and the beam #1 is used to perform the second transmission on the overlapped time domain resource and the first frequency domain resource.

The first transmission includes sending or receiving the resource, such as receiving the PDSCH or sending the PUSCH. The second transmission includes sending or receiving the resource, such as receiving the PDSCH or sending the PUSCH.

**In case 3**, the M first beams are different from the N second beams, and there is the overlapped frequency domain resource between the first frequency domain resource and the second frequency domain resource.

That is, the M first beams are entirely different from the N second beams.

3.1 In a case that the first terminal cannot support the M first beams and the N second beams simultaneously, the N second beams are used to perform transmission on the overlapped time domain resource and the second frequency domain resource. In the overlapped time domain resource, no transmission is performed on the frequency domain resource in the first frequency domain resource other than the overlapped frequency domain resource.

Schematically, taking the M first beams including the beam #1, and the N second beams including the beam #2 and the beam #3 as an example for illustration, the beam #1, the beam #2 and the beam #3 are different from each other. In a case that the first terminal cannot support the beam #1, the beam #2 and the beam #3 simultaneously, the beam #2 and the beam #3 are used to perform transmission on the overlapped time domain resource and the second frequency domain resource. In the overlapped time domain resource, no transmission is performed on the frequency domain resource in the first frequency domain resource other than the overlapped frequency domain resource.

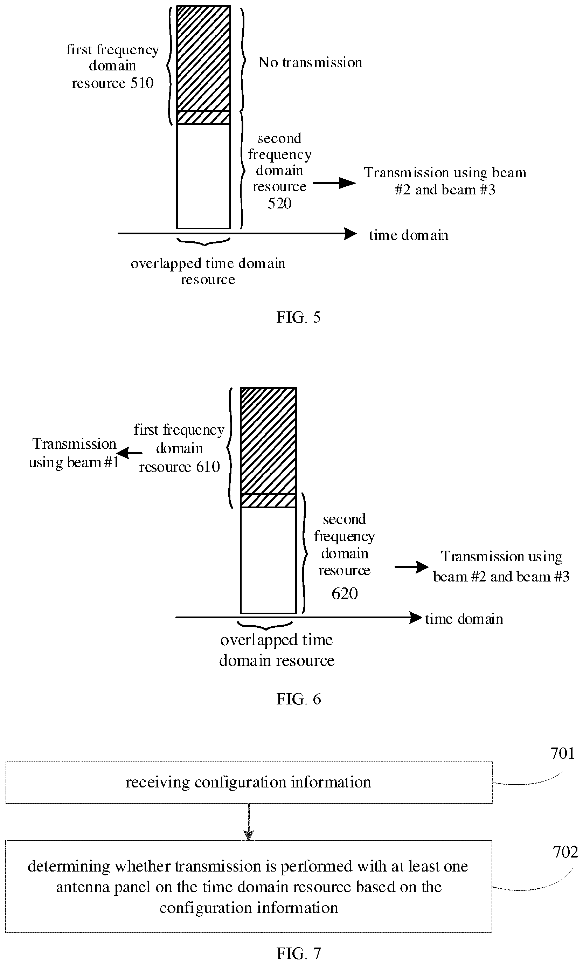

Schematically, please refer to FIG. 5, which is a schematic diagram illustrating a transmission solution according to an embodiment of the disclosure. As illustrated in FIG. 5, the first frequency domain resource 510 overlaps with the second frequency domain resource 520. The first terminal cannot support the beam #1, the beam #2 and the beam #3 simultaneously on the overlapped time domain resource of the beam #1, the beam #2 and the beam #3. Therefore, the first terminal employs the beam #2 and the beam #3 to perform transmission on the overlapped time domain resource and the second frequency domain resource 520. In the overlapped time domain resource, no transmission is performed on the frequency domain resource in the first frequency domain resource 510 other than overlapped frequency domain resource.

3.2 In a case that the first terminal can support the M first beams and the N second beams simultaneously, the first terminal performs the first transmission on the overlapped time domain resource and the second frequency domain resource by employing the N second beams, and performs the second transmission on the overlapped time domain resource and the first frequency domain resource by employing the M first beams.

Schematically, taking the M first beams including the beam #1 and the N second beams including the beam #2 and the beam #3 as an example for illustration, the beam #1, the beam #2 and the beam #3 are different from each other. In a case that the first terminal can support the beam #1, the beam #2 and the beam #3 simultaneously, the beam #2 and the beam #3 are used to perform the transmission on the overlapped time domain resource and the second frequency domain resource. In the overlapped time domain resource, the beam #1 is used to perform the transmission on the first frequency domain resource.

Schematically, please refer to FIG. 6, which is a schematic diagram illustrating a transmission solution according to an embodiment of the disclosure. As illustrated in FIG. 6, the first frequency domain resource 610 overlaps with the second frequency domain resource 620. The first terminal can support the beam #1, the beam #2 and the beam #3 simultaneously on the overlapped time domain resource of the beam #1, the beam #2 and the beam #3. Therefore, the first terminal performs the transmission on the overlapped time domain resource and the second frequency domain resource 620 by employing the beam #2 and the beam #3. in the overlapped time domain resource, the first terminal performs the transmission on the first frequency domain resource 610 by employing the beam #1.

In some embodiments, since the time frequency domain resource of the first beam is the same as the time frequency domain resource of the second beam on the overlapped frequency domain resource, different demodulation reference signal (DMRS) ports also need to be employed. That is, in a case that different DMRS ports are employed by the at least one first beam and the at least one second beam, the at least one first beam is used to perform the second transmission on the overlapped time domain resource and the first frequency domain resource. In a case that a same DMRS port is employed by the at least one first beam and the at least one second beam, a transmission through the first beam is discarded.

In conclusion, with the resource determination method provided by embodiments of the disclosure, there is proposed a method for determining a transmitting beam when the time domain resources indicated by two DCI signalings received by the terminal are overlapped, thereby ensuring a beam consistency between the terminal and the base station, and improving a performance of the beam-based transmission.

Alternatively, in embodiments illustrated in FIG. 2, the network device sends the first configuration information and the second configuration information to the first terminal. The first configuration information includes the first time domain resource, the first frequency domain resource and the M first beams. The second configuration information includes the second time domain resource, the second frequency domain resource and the N second beams. There is the overlapped time domain resource between the first time domain resource and the second time domain resource, where M and N are integers greater than 0.

The specified transmission resource for the first terminal on the overlapped time domain resource is determined.

In an alternative embodiment, the specified transmission resource includes a specified frequency domain resource and/or a specified beam.

In an alternative embodiment, the specified beam includes the N second beams.

In an alternative embodiment, the first beam is different from the second beam, that is, any first beam is different from any second beam, and the first terminal is not capable of supporting the M first beams and the N second beams simultaneously.

In an alternative embodiment, the specified frequency domain resource includes the second frequency domain resource.

In an alternative embodiment, the first frequency domain resource does not overlap with the second frequency domain resource.

Alternatively, there are the overlapped frequency domain resource between the first frequency domain resource and the second frequency domain resource.

In an alternative embodiment, the N second beams include at least one first beam.

In an alternative embodiment, the specified frequency domain resource includes the second frequency domain resource.

Alternatively, the specified frequency domain resource includes the second frequency domain resource and the third frequency domain resource. The third frequency domain resource includes the frequency domain resource in the first frequency domain resource that does not overlap with the second frequency domain resource.

In an alternative embodiment, the specified beam also includes the at least one first beam, and the at least one first beam is different from any second beam.

In an alternative embodiment, the first terminal is capable of supporting the at least one first beam and the N second beams simultaneously.

In an alternative embodiment, the specified frequency domain resource includes the second frequency domain resource and the first frequency domain resource, and the first frequency domain resource does not overlap the second frequency domain resource.

In an alternative embodiment, the specified frequency domain resource includes the second frequency domain resource and the first frequency domain resource, and there is the overlapped frequency domain resource between the first frequency domain resource and the second frequency domain resource.

In an alternative embodiment, different demodulation reference signal (DMRS) ports are employed by the at least one first beam and at least one second beam.

In an alternative embodiment, the specified frequency domain resource includes the second frequency domain resource. There is the overlapped frequency domain resource between the first frequency domain resource and the second frequency domain resource.

In an alternative embodiment, different demodulation reference signal (DMRS) ports are employed by the at least one first beam and at least one second beam.

In some embodiments, in a case that the first terminal and the second terminal are implemented as different terminals, after a resource configured to the second terminal is reconfigured to the first terminal, an occupation status of the resource needs to be indicated to the second terminal. Schematically, firstly, the second terminal is configured with a frequency domain resource RB set#0 in the t1 slot for the eMBB service, and then the two symbols in the frequency domain resource RB set#0 in the t1 slot are configured to the URLLC service of the first terminal. Therefore, in order to enable better reception of the second terminal of the eMBB service, the network device needs to indicate to the second terminal that the two symbols of the RB set#0 in the t1 slot are not actually configured to the eMBB service of the second terminal. In this way, the second terminal may not consider data transmitted in the time frequency resource during receiving.

In the related art, a time frequency resource allocated to another service is indicated by a pre-emption indication, and each of multiple terminals (including the above second terminal) in a cell need to determines whether the time frequency resource originally allocated to itself is occupied by a service of another terminal based on the time frequency resource indicated by the pre-emption indication. If so, the terminal needs to ignore the data sent on the time frequency resource during receiving.

It should be noted that, the pre-emption indication in an NR only relates to the time frequency resources. However, in the NR, especially when a communication frequency band is in a frequency range 2, due to a rapid attenuation of the high-frequency channel, beam-based sending and receiving are used to ensure a coverage area. Moreover, a same TRP/panel merely has one beam direction at a same time, and different TRPs/panels may have different beam directions at the same time. Therefore, in a case that a beam direction #1 (transmitted by TRP#1/panel#1) is employed on time frequency resource occupied by a service of an URLLC user, and a beam direction 2 (transmitted by TRP#2/panel#2) is employed by a service of an eMBB user on the same time frequency resource, it is equivalent to that on the time frequency resource occupied by the URLLC service and the eMBB service may be used to perform transmissions simultaneously by employing beam directions on different antenna panels, so there is no need to send the pre-emption indication.

Only when both the time frequency resource and the antenna panel employed by the URLLC service are the same as those employed by the eMBB service, the pre-emption indication needs to be sent. In a case that the URLLC service merely occupies a part of an entire BWP bandwidth, another part of the bandwidth may also send other data to another terminal by a beam of the URLLC, that is, when there is no overlapped frequency domain resource for the URLLC terminal and the terminal employing the same beam as the URLLC terminal, data of the non-overlapped resource may be received continuously.

Therefore, for the above problem, embodiments of the disclosure provide a resource determination method. Schematically, please refer to FIG. 7, which is a flow chart illustrating a resource determination method according to an embodiment of the disclosure. Taking the method applied to a second terminal as an example for illustration, as illustrated in FIG. 7, the method includes the following steps.

At step 701, configuration information is received.

The configuration information includes at least one of: a time domain resource, a frequency domain resource, at least one antenna panel and at least one third beam. The configuration information is configured to indicate an occupation status of the time domain resource and the frequency domain resource to the second terminal.

In some embodiments, the configuration information is configured to indicate that the time frequency resource is preferentially occupied by the first terminal, i.e., indicating that the time frequency resource is occupied to the second terminal.

Alternatively, the configuration information is a group sending configuration instruction. In some embodiments, the configuration information is implemented as a third DCI signaling. The third DCI signaling is a group common DCI, indicating, to a terminal group in the cell, the time frequency resource is occupied by the first terminal.

In some embodiments, the antenna panel may be indicated by at least one of: an antenna panel ID, a TRP ID, a CORESET pool index, a reference signal resource set ID, and a reference signal resource ID. The reference signal resource may be at least one of the SSB, the CSI-RS and the SRS.

At step 702, it is determined whether transmission with at least one antenna panel is performed on the time domain resource based on the configuration information.

Alternatively, the second terminal determines that the transmission is not performed with the at least one antenna panel on the frequency domain resource in the time domain resource indicated by the configuration information.

Even if for the second terminal, the PDSCH/PUSCH, a PUSCH of a configured grant or a semi-persistent PDSCH is scheduled by the DCI on the frequency domain resource in the time domain resource previously, the second terminal determines that the transmission is not performed with the at least one antenna panel on the frequency domain resource in the time domain resource indicated by the configuration information based on the configuration information.

Alternatively, a reference signal corresponding to the at least one third beam in the configuration information is the synchronization signal block (SSB). The at least one third beam is a third beam configured for the first terminal.

The second terminal determines whether the transmission is performed through a target beam continuously based on whether the transmission needs to be performed with the at least one antenna panel on the frequency domain resource other than the frequency domain resource in the time domain resource.

Alternatively, an indication form of the third beam is an SSB ID, and the number of bits for indicating the SSB ID is determined by the number of SSBs configured by the RRC. If only one SSB ID is indicated in the DCI and the number of SSBs indicated by the RRC is 16, the number of bits is 4. In a case that multiple SSB IDs need to be indicated in the DCI, and the number of SSBs indicated by the RRC is 16, the number of bits is 16.

Alternatively, the second terminal is configured or scheduled to perform transmission with the at least one antenna panel through the target beam on the time domain resource.

In a case that the target beam and the at least one third beam have a Quasi Co-Location (QCL) relationship, it is determined that the transmission is performed with the at least one antenna panel on a fourth frequency domain resource other than the frequency domain resource in the time domain resource.

And/or, in a case that the target beam and the at least one third beam have a non-QCL relationship, it is determined that there is no need to perform transmission with the at least one antenna panel on the time domain resource.

In conclusion, with the method provided in the embodiment, it is designed that the beam direction is indicated while the time frequency resource is indicated in the pre-emption indication, thereby realizing a resource diversity usage of the eMBB user and the URLLC user during multi-beam transmission.

Alternatively, in the embodiments illustrated in FIG. 7, the network device sends the second configuration information to the first terminal. The second configuration information is configured to configure the time domain resource, the frequency domain resource and the at least one transmission beam to the first terminal as the transmission resource. Meanwhile, the network device sends the configuration information to the second terminal in the same cell. The configuration information includes at least one of: the time domain resource, the frequency domain resource, the at least one antenna panel and the at least one third beam. The configuration information is configured to indicate the occupation status of the time domain resource and the frequency domain resource to the second terminal. The antenna panel may also be called TRP.

Alternatively, the reference signal corresponding to the at least one third beam in the configuration information is the synchronization signal block (SSB).

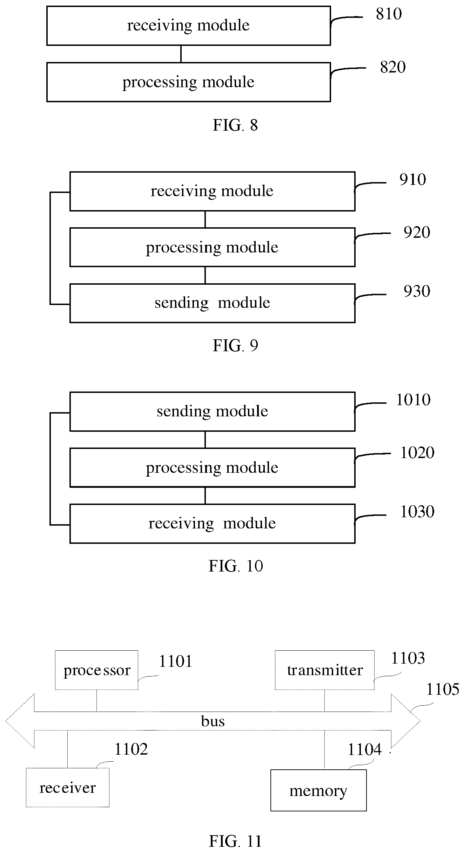

FIG. 8 is a block diagram illustrating a resource determination apparatus according to an embodiment of the disclosure. As illustrated in FIG. 8, the apparatus is applied to a first terminal. The apparatus includes:
a receiving module 810, configured to receive first configuration information and second configuration information, in which the first configuration information includes a first time domain resource, a first frequency domain resource and M first beams, the second configuration information includes a second time domain resource, a second frequency domain resource and N second beams, and the first time domain resource and the second time domain resource have an overlapped time domain resource, where M and N are positive integers; and
a processing module 820, configured to determine a specified transmission resource on the overlapped time domain resource.

In an alternative embodiment, the specified transmission resource includes a specified frequency domain resource and/or a specified beam.

In an alternative embodiment, the specified beam includes the N second beams.

In an alternative embodiment, the first beam is different from the second beam, and the first terminal is not capable of supporting the M first beams and the N second beams simultaneously.

In an alternative embodiment, the N second beams include at least one first beam.

In an alternative embodiment, the specified frequency domain resource includes at least one of the first frequency domain resource and the second frequency domain resource.

In an alternative embodiment, the specified frequency domain resource includes the second frequency domain resource and a third frequency domain resource, in which the third frequency domain resource includes a frequency domain resource on the first frequency domain resource that does not overlap with the second frequency domain resource.

In an alternative embodiment, the specified beam further includes at least one first beam, the first beam is different from the second beam, and the first terminal is capable of supporting the at least one first beam and the N second beams simultaneously.

In an alternative embodiment, the specified frequency domain resource includes the first frequency domain resource and the second frequency domain resource, and the first frequency domain resource and the second frequency domain resource have an overlapped frequency domain resource.

In an alternative embodiment, different demodulation reference signal (DMRS) ports are employed by the at least one first beam and at least one second beam.

In an alternative embodiment, in the M first beams,
time domain resources or frequency domain resources corresponding to any two first beams are different; or
DMRS ports corresponding to any two first beams are different.

In an alternative embodiment, in the N second beams,
time domain resources or frequency domain resources corresponding to any two second beams are different; or
DMRS ports corresponding to any two second beams are different.

FIG. 9 is a block diagram illustrating a resource determination apparatus according to an embodiment of the disclosure. As illustrated in FIG. 9, the apparatus is applied to a second terminal. The apparatus includes:
a receiving module 910, configured to receive configuration information, in which the configuration information is configured to indicate an occupation status of a time domain resource and a frequency domain resource to the second terminal; and
a processing module 920, configured to determine whether transmission with at least one antenna panel is performed on the time domain resource based on the configuration information.

The configuration information includes at least one of:
the time domain resource;
the frequency domain resource;
the at least one antenna panel; or
at least one third beam.

In an alternative embodiment, a reference signal corresponding to the at least one third beam in the configuration information is a synchronization signal block (SSB).

In an alternative embodiment, the second terminal is configured or scheduled to perform the transmission with the at least one antenna panel on the time domain resource through a target beam.

In an alternative embodiment, the processing module 920 is also configured to, in a case that the target beam and the at least one third beam satisfy a quasi-co-located relationship, determine that there is a need to perform the transmission with the at least one antenna panel on a fourth frequency domain resource other than the frequency domain resource on the time domain resource; and/or
the processing module 920 is also configured to, in a case that the target beam and the at least one third beam satisfy a non-quasi-co-located relationship, determine that there is no need to perform the transmission with the at least one antenna panel on the time domain resource.

FIG. 10 is a block diagram illustrating a resource determination apparatus according to another embodiment of the disclosure. As illustrated in FIG. 10, the apparatus is applied to a network device, and the apparatus includes:
a sending module 1010, configured to send first configuration information and second configuration information to a first terminal, in which the first configuration information includes a first time domain resource, a first frequency domain resource and M first beams, the second configuration information includes a second time domain resource, a second frequency domain resource and N second beams, and the first time domain resource and the second time domain resource have an overlapped time domain resource, where M and N are positive integers; and
a processing module 1020, configured to determine a specified transmission resource for the first terminal on the overlapped time domain resource.

In an alternative embodiment, the specified transmission resource includes a specified frequency domain resource and/or a specified beam.

In an alternative embodiment, the specified beam includes the N second beams.

In an alternative embodiment, the first beam is different from the second beam, and the first terminal is not capable of supporting the M first beams and the N second beams simultaneously.

In an alternative embodiment, the N second beams include at least one first beam.

In an alternative embodiment, the specified frequency domain resource includes at least one of the first frequency domain resource and the second frequency domain resource.

In an alternative embodiment, the specified frequency domain resource includes the second frequency domain resource and a third frequency domain resource, in which the third frequency domain resource includes a frequency domain resource on the first frequency domain resource that does not overlap with the second frequency domain resource.

In an alternative embodiment, the specified beam further includes at least one first beam, the first beam is different from the second beam, and the first terminal is capable of supporting the at least one first beam and the N second beams simultaneously.

In an alternative embodiment, the specified frequency domain resource includes the first frequency domain resource and the second frequency domain resource, and the first frequency domain resource and the second frequency domain resource have an overlapped frequency domain resource.

In an alternative embodiment, different demodulation reference signal (DMRS) ports are employed by the at least one first beam and at least one second beam.

In an alternative embodiment, the sending module 1010 is also configured to send configuration information to a second terminal, in which the configuration information is configured to indicate an occupation status of a time domain resource and a frequency domain resource to the second terminal.

The configuration information includes at least one of:
the time domain resource;
the frequency domain resource;
at least one antenna panel; or
at least one third beam.

In an alternative embodiment, a reference signal corresponding to the at least one third beam in the configuration information is a synchronization signal block (SSB).

In conclusion, with the resource determination apparatus provided in this embodiment, there is proposed a method for determining the transmission beam when the time domain resources indicated by two DCI signalings received by the terminal are overlapped, thereby ensuring the beam consistency between the terminal and the base station and improving the performance of beam-based transmission. In addition, it is designed that the beam direction is indicated while the time frequency resource is indicated in the pre-emption indication, thereby implementing the resource diversity usage of the eMBB user and the URLLC user during the multi-beam transmission.

FIG. 11 is a block diagram illustrating a terminal according to an embodiment of the disclosure. The terminal includes: a processor 1101, a receiver 1102, a transmitter 1103, a memory 1104 and a bus 1105.

The processor 1101 includes one or more processing cores. The processor 1101 is configured to execute various functional applications and information processing by operating software programs and modules.

The receiver 1102 and the transmitter 1103 may be implemented as a communication component. The communication component may be a communication chip.

The memory 1104 is connected to the processor 1101 via a bus 1105.

The memory 1104 may be configured to store at least one instruction. The processor 1101 is configured to execute the at least one instruction to implement each action in the above method embodiment.

In addition, the memory 1104 may be implemented by any type of volatile or nonvolatile memory device or a combination thereof. The volatile or nonvolatile memory device includes, but not limited to, a magnetic disk or optical disk, an electrically erasable programmable read-only memory (EEPROM), an erasable programmable read-only memory (EPROM), a static random-access memory (SRAM), a read-only memory (ROM), a magnetic memory, a flash memory, a programmable read-only memory (PROM)

In an embodiment, there is also provided a non-transitory computer readable storage medium including instructions, such as a memory including instructions. The instructions may be executed by the processor of the terminal to implement the method performed by the terminal in the above method for switching devices. For example, the non-transitory computer readable storage medium may be an ROM, an RAM, a CD-ROM, a magnetic tape, a floppy disk, an optical data storage device, etc.

There is the non-transitory computer readable storage medium. When the instructions in the non-transitory computer readable storage medium are executed by the terminal, the terminal is enabled to execute the resource determination method.

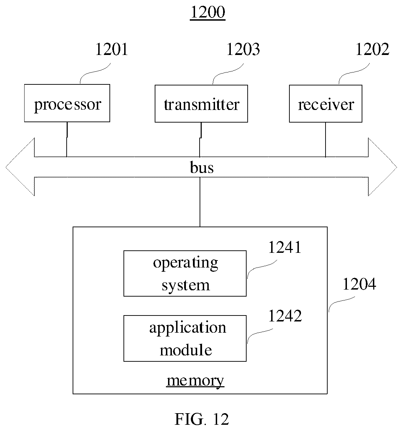

FIG. 12 is a block diagram illustrating a network device 1200 according to an embodiment of the disclosure. In some embodiments, the network device 1200 may be a base station.

The network device 1200 may include a processor 1201, a receiver 1202, a transmitter 1203 and a memory 1204. The receiver 1202, the transmitter 1203 and the memory 1204 are respectively connected to the processor 1201 through buses.

The processor 1201 includes one or more processing cores. The processor 1201 is configured to execute the method performed by the network device in the method for switching devices according to embodiments of the disclosure by operating software programs and modules. The memory 1204 may be configured to store the software programs and the modules. In detail, the memory 1204 may be configured to store an operating system 1241 and an application module 1242 required by at least one function. The receiver 1202 is configured to receive communication data sent by other devices. The transmitter 1203 is configured to send communication data to other devices.

With a non-transitory computer readable storage medium, the network device is enabled to perform the above resource determination method when instructions in the non-transitory computer storage medium are executed by a processor of the network device.

An embodiment of the disclosure also provides a communication system. The system includes a terminal and a network device.

The terminal includes the resource determination apparatus provided in embodiments illustrated in FIG. 8 or FIG. 9.

The network device includes the resource determination apparatus provided in embodiments illustrated in FIG. 10.

An embodiment of the disclosure also provides a communication system. The communication system includes a terminal and a network device.

The terminal includes the terminal provided in the embodiment illustrated in FIG. 11.

The network device includes the network device provided in the embodiment illustrated in FIG. 12.

An exemplary embodiment of the disclosure also provides a computer readable storage medium. The computer readable storage medium has at least one instruction, at least one program, a code set or an instruction set stored thereon. The at least one instruction, the at least one program, the code set or the instruction set is loaded and executed by the processor to implement the steps performed by the terminal or the network device in the method for determining the resource provided by the respective method embodiments.

It should be understood that, the term "a plurality of' herein means two or more. The term "and/or" describes an association relationship of associated objects, which means that there can be three kinds of relationships. For example, A and/or B can mean that there are three situations: A alone, A and B at the same time, and B alone. The character "/" generally indicates that context objects are an "or" relationship.

Other implementations of the disclosure will be apparent to the skilled in the art from consideration of the specification and practice of the disclosure disclosed here. This disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It should be understood that, the disclosure is not limited to the exaction construction that has been described above and illustrated in the accompanying drawings, and that various modifications and changes may be made without departing from the scope thereof. The scope of the disclosure only is limited by the appended claims.

## Claims

1. A resource determination method, performed by a first terminal, comprising:
receiving first configuration information and second configuration information, wherein the first configuration information comprises a first time domain resource, a first frequency domain resource and M first beams, the second configuration information comprises a second time domain resource, a second frequency domain resource and N second beams, and the first time domain resource and the second time domain resource have an overlapped time domain resource, where M and N are positive integers; and
determining a specified transmission resource on the overlapped time domain resource.

2. The method of claim 1, wherein the specified transmission resource comprises a specified frequency domain resource and/or a specified beam.

3. The method of claim 2, wherein the specified beam comprises the N second beams.

4. The method of claim 3, wherein the first beam is different from the second beam, and the first terminal is not capable of supporting the M first beams and the N second beams simultaneously.

5. The method of claim 3, wherein the N second beams comprise at least one first beam.

6. The method of claim 5, wherein the specified frequency domain resource comprises at least one of the first frequency domain resource and the second frequency domain resource.

7. The method of claim 5, wherein the specified frequency domain resource comprises the second frequency domain resource and a third frequency domain resource, wherein the third frequency domain resource comprises a frequency domain resource in the first frequency domain resource that does not overlap with the second frequency domain resource.

8. The method of claim 3, wherein the specified beam further comprises at least one first beam, the first beam is different from the second beam, and the first terminal is capable of supporting the at least one first beam and the N second beams simultaneously.

9. The method of claim 8, wherein the specified frequency domain resource comprises the first frequency domain resource and the second frequency domain resource, and the first frequency domain resource and the second frequency domain resource have an overlapped frequency domain resource.

10. The method of claim 9, wherein different demodulation reference signal (DMRS) ports are used by the at least one first beam and at least one second beam.

11. The method of any of claims 1 to 10, wherein, in the M first beams,
time domain resources or frequency domain resources corresponding to any two first beams are different; or
DMRS ports corresponding to any two first beams are different.

12. The method of any of claims 1 to 10, wherein, in the N second beams,
time domain resources or frequency domain resources corresponding to any two second beams are different; or
DMRS ports corresponding to any two second beams are different.

13. A resource determination method, performed by a second terminal, comprising:
receiving configuration information, wherein the configuration information is configured to indicate an occupation status of a time domain resource and a frequency domain resource to the second terminal; and
determining whether transmission with at least one antenna panel is performed on the time domain resource based on the configuration information,
wherein the configuration information comprises at least one of:
the time domain resource;
the frequency domain resource;
the at least one antenna panel; or
at least one third beam.

14. The method of claim 13, wherein a reference signal corresponding to the at least one third beam in the configuration information is a synchronization signal block (SSB).

15. The method of claim 13, wherein the second terminal is configured or scheduled to perform the transmission with the at least one antenna panel on the time domain resource through a target beam.

16. The method of claim 15, further comprising:
in a case that the target beam and the at least one third beam satisfy a quasi-co-located relationship, determining that there is a need to perform the transmission with the at least one antenna panel on a fourth frequency domain resource other than the frequency domain resource on the time domain resource; and/or,
in a case that the target beam and the at least one third beam satisfy a non-quasi-co-located relationship, determining that there is no need to perform the transmission with the at least one antenna panel on the time domain resource.

17. A resource determination method, performed by a network device, comprising:
sending first configuration information and second configuration information to a first terminal, wherein the first configuration information comprises a first time domain resource, a first frequency domain resource and M first beams, the second configuration information comprises a second time domain resource, a second frequency domain resource and N second beams, and the first time domain resource and the second time domain resource have an overlapped time domain resource, where M and N are positive integers; and
determining a specified transmission resource for the first terminal on the overlapped time domain resource.

18. The method of claim 17, wherein the specified transmission resource comprises a specified frequency domain resource and/or a specified beam.

19. The method of claim 18, wherein the specified beam comprises the N second beams.

20. The method of claim 19, wherein the first beam is different from the second beam, and the first terminal is not capable of supporting the M first beams and the N second beams simultaneously.

21. The method of claim 19, wherein the N second beams comprise at least one first beam.

22. The method of claim 21, wherein the specified frequency domain resource comprises at least one of the first frequency domain resource and the second frequency domain resource.

23. The method of claim 21, wherein the specified frequency domain resource comprises the second frequency domain resource and a third frequency domain resource, wherein the third frequency domain resource comprises a frequency domain resource on the first frequency domain resource that does not overlap with the second frequency domain resource.

24. The method of claim 19, wherein the specified beam further comprises at least one first beam, the first beam is different from the second beam, and the first terminal is capable of supporting the at least one first beam and the N second beams simultaneously.

25. The method of claim 24, wherein the specified frequency domain resource comprises the first frequency domain resource and the second frequency domain resource, and the first frequency domain resource and the second frequency domain resource have an overlapped frequency domain resource.

26. The method of claim 25, wherein different demodulation reference signal (DMRS) ports are used by the at least one first beam and at least one second beam.

27. A resource determination method, performed by a network device, comprising:
sending configuration information to a second terminal, wherein the configuration information is configured to indicate an occupation status of a time domain resource and a frequency domain resource to the second terminal,
wherein the configuration information comprises at least one of:
the time domain resource;
the frequency domain resource;
at least one antenna panel; or
at least one third beam.

28. The method of claim 27, wherein a reference signal corresponding to the at least one third beam in the configuration information is a synchronization signal block (SSB).

29. A resource determination apparatus, applied to a first terminal, comprising:
a receiving module, configured to receive first configuration information and second configuration information, wherein the first configuration information comprises a first time domain resource, a first frequency domain resource and M first beams, the second configuration information comprises a second time domain resource, a second frequency domain resource and N second beams, and the first time domain resource and the second time domain resource have an overlapped time domain resource, where M and N are positive integers; and
a processing module, configured to determine a specified transmission resource on the overlapped time domain resource.

30. A resource determination apparatus, comprising:
a receiving module, configured to receive configuration information, wherein the configuration information is configured to indicate an occupation status of a time domain resource and a frequency domain resource to a second terminal; and
a processing module, configured to determine whether transmission with at least one antenna panel is performed on the time domain resource based on the configuration information,
wherein the configuration information comprises at least one of:
the time domain resource;
the frequency domain resource;
the at least one antenna panel; or
at least one third beam.

31. A resource determination apparatus, comprising:
a sending module, configured to send first configuration information and second configuration information to a first terminal, wherein the first configuration information comprises a first time domain resource, a first frequency domain resource and M first beams, the second configuration information comprises a second time domain resource, a second frequency domain resource and N second beams, and the first time domain resource and the second time domain resource have an overlapped time domain resource, where M and N are positive integers; and
a processing module, configured to determine a specified transmission resource for the first terminal on the overlapped time domain resource.

32. A resource determination apparatus, comprising:
a sending module, configured to send configuration information to a second terminal, wherein the configuration information is configured to indicate an occupation status of a time domain resource and a frequency domain resource to the second terminal,
wherein the configuration information comprises at least one of:
the time domain resource;
the frequency domain resource;
at least one antenna panel; or
at least one third beam.

33. A terminal, comprising:
a processor;
a transceiver, connected to the processor; and
a memory, configured to store executable signalings of the processor,
wherein the processor is configured to load and execute the executable signalings to implement the resource determination method according to any one of claims 1 to 16.

34. A network device, comprising:
a processor;
a transceiver, connected to the processor; and
a memory, configured to store executable signalings of the processor,
wherein the processor is configured to load and execute the executable signalings to implement the resource determination method according to any one of claims 17 to 28.

35. A computer readable storage medium having at least one instruction, at least one program, at least one code set or at least one instruction set stored thereon, wherein the at least one instruction, the at least one program, the at least one code set or the at least one instruction set is loaded and executed by a processor to implement the resource determination method according to any one of claims 1 to 28.
